# EUROPEAN PATENT SPECIFICATION

(11) **EP 2 139 156 B1**
(45) Date of publication and mention of the grant of the patent: **07.10.2015**
(21) Application number: 08783716.7
(22) Date of filing: 22.07.2008
(51) Int. Cl.: H04L 12/14, H04Q 3/00

(54) **METHOD, SYSTEM AND DEVICE FOR REALIZING USER EQUIPMENT REGISTERING IN PERSONAL NETWORK**
VERFAHREN, SYSTEM UND GERÄT ZUR DURCHFÜHRUNG VON BENUTZERGERÄTREGISTRIERUNG IM PERSÖNLICHEN NETZWERK
PROCÉDÉ, SYSTÈME ET DISPOSITIF SERVANT À RÉALISER UN ENREGISTREMENT D'UN ÉQUIPEMENT UTILISATEUR DANS UN RÉSEAU PERSONNEL

(30) Priority: 27.07.2007 CN 200710129840
(43) Date of publication of application: 30.12.2009
(73) Proprietor: Huawei Technologies Co., Ltd., Longgang District Shenzhen, Guangdong 518129 (CN)
(72) Inventor: ZHU, Dongming, Shenzen 518129 (CN); HE, Xiaoyan, Shenzen 518129 (CN)
(74) Representative: Kreuz, Georg Maria
(86) International application number: PCT/CN2008/071719
(87) International publication number: WO 2009/015584

(56) References cited:
- CN-A- 1 878 343
- CN-A- 1 893 683
- US-A1- 2004 153 667
- US-A1- 2007 171 893
- "3rd Generation Partnership Project; Technical Specification Group Services and System Aspects; Personal Network Management (PNM); Procedures and Information Flows; Stage 2 (Release 8)" ETSI STANDARDS,, [Online] vol. 23.259, no. v1.2.0, 1 November 2007 (2007-11-01), pages 1-38, XP002491967 Retrieved from the Internet: URL:http://www.3gpp.org/ftp/Specs/html-inf o/23259.htm> [retrieved on 2007-11-12]

## Description

### BACKGROUND OF THE INVENTION

### Field of the Technology

The present invention relates to the field of communication and network, and more particularly to a method, a system, and a device for registering user equipment (UE) with a personal network (PN).

### Background of the Invention

Starting from Release 5 of the 3rd Generation Partnership Project (3GPP R5), a universal mobile telecommunication system (UMTS) core network consists of three subsystems, namely, a circuit switched (CS) domain, a packet switched (PS) domain, and an Internet Protocol (IP) multimedia subsystem (IMS). The CS domain is adapted to provide a circuit service connection for a user. The PS domain is adapted to provide a packet service connection for a user. The IMS is a subsystem overlaid on an existing PS domain added during the 3GPP R5. The IMS employs the PS domain as a bearer channel for the transmission of upper layer control signaling and media data, introduces a Session Initiation Protocol (SIP) as a service control protocol, and provides abundant multimedia services for subscribers by separating service control from bearer control based on characteristics of the SIP, that is, being simple, extensible, and convenient for media combination.

In Release 8 of the 3GPP, a new personal network management (PNM) service is introduced. In a scenario where one user has a plurality of terminal devices, centralized management is performed on the terminal devices. These terminal devices constitute a PN of the user, and the centralized management on the PN is referred to as the PNM.

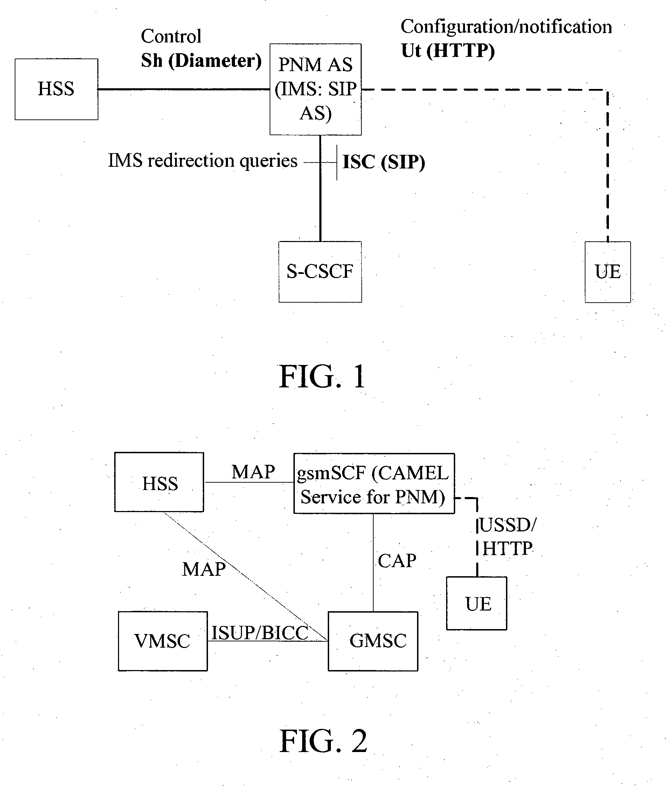

In the prior art, a PNM server may be implemented in the following two modes.
1. Separate deployment. The PNM server is separately deployed and implemented in the IMS and the CS domain. FIGs. 1 and 2 respectively show the implementation of the PNM server in the IMS and the CS domain. In the IMS domain, the PNM server is implemented as a SIP application server (AS) (that is, a PNM AS). UE may interact with the AS directly through a Ut interface. In the CS domain, the PNM server is implemented as a global system for mobile communications (GSM) service control function (SCF) (gsmSCF).
2. Centralized deployment. The PNM AS is only deployed in the IMS domain, and the gsmSCF is not deployed in the CS domain. The PNM AS in the IMS domain provides services for UE in the IMS domain and the CS domain at the same time.

However, the PNM service mainly includes a redirection service and a private network service. The UE has to first register with and join the PN in order to use the two services in the PN. In the prior art, how to register UE in an IMS domain with a PN is solved. However, in the prior art, how to register UE in a CS domain with a PN (registration with the PN includes joining the PN and exiting the PN) is not mentioned. Therefore, the PNM service is currently unable to be provided for UE in the CS domain.

US 2047/171893A1 relates to an inter-domain routing method for a dual-mode terminal, and a registration system and method. With an inter-domain IWGW, the dual-mode terminal registers respectively with the IWGW when it logins in the circuit domain or the packet domain; a GMSC or CSCF triggers to the IWGM upon receipt of a call for the terminal; the IWGW decides the route according to the registration state and a predefined policy; and the GMSC or CSCF continues the call according the decision result. A practical policy is to route the call to a domain where the terminal has a latest registration. A SFF is added between the HLR and the VLR, for duplicating and forwarding the interaction signaling between the VLR and the HLR to the IWGW.

### SUMMARY OF THE INVENTION

Accordingly, the present invention is directed to a method, a system, and a device for registering user equipment (UE) with a personal network (PN), so that UE in a circuit switched (CS) domain can be registered with the PN.

The present invention is further directed to a method and a system for obtaining capability information about UE, so that a network element (NE) that requires capability information about the UE may obtain the capability information about the UE.

As a first aspect of the present invention a method for registering UE with a PN is provided, which includes the following steps. A PN management (PNM) server senses a change of an access status of the UE in a CS domain. The PNM server adjusts a registration status of the UE in the PN according to the change of the access status of the UE in the CS domain.

As a second aspect of the present invention a PNM server is provided, which includes a sensing unit and an adjusting unit. The sensing unit is adapted to sense a change of an access status of UE in a CS domain. The adjusting unit is adapted to adjust a registration status of the UE in a PN according to the change of the access status of the UE in the CS domain sensed by the sensing unit.

As a third aspect of the present invention a system for registering UE with a PN is provided, which includes the UE and a PNM server. An access status of the UE in a CS domain is changed. The PNM server is adapted to sense the change of the access status of the UE in the CS domain, and adjust a registration status of the UE in the PN according to the change.

As a fourth aspect of the present invention a method for obtaining capability information about UE is provided, which includes the following steps. A device management (DM) server obtains the capability information about the UE. The DM server, acting as a presence user or a network agent of a presence server, inputs the capability information about the UE to the presence server. The presence server obtains and releases the capability information about the UE to an NE that subscribes to the capability information about the UE.

As a fifth aspect of the present invention a system for obtaining capability information about UE is provided, which includes the UE, a DM server, a presence server, and an NE that requires the capability information about the UE. The DM server is adapted to obtain the capability information about the UE, and input the capability information about the UE to the presence server as a presence user or a network agent of the presence server. The presence server is adapted to receive the capability information about the UE input by the DM server, and release the capability information about the UE to the NE that subscribes to the capability information about the UE.

In the method for registering UE with a PN according to the present invention, a PNM server senses a change of an access status of the UE in a CS domain, and then adjusts a registration status of the UE in the PN according to the change of the access status of the UE in the CS domain. Therefore, the UE in the CS domain can be registered with the PN, and a CS domain user may also enjoy the PNM service. The present invention further provides a PNM server and a system for registering UE with a PN, so as to support the method for registering UE with a PN according to the present invention.

In the method and system for obtaining capability information about UE according to the present invention, a DM server obtains the capability information about the UE. The DM server, acting as a presence user or a network agent of a presence server, inputs the capability information about the UE to the presence server. The presence server obtains and releases the capability information about the UE to an NE that subscribes to the capability information about the UE, so that the NE that requires the capability information about the UE obtains the capability information about the UE.

### BRIEF DESCRIPTION OF THE DRAWINGS

FIG. 1 is a schematic view of the implementation of a PNM server in an IMS domain in the prior art;
FIG. 2 is a schematic view of the implementation of a PNM server in a CS domain in the prior art;
FIG. 3 is a flow chart of a method for registering UE with a PN according to an embodiment of the present invention;
FIG. 4 is a schematic structural view of a PNM server according to an embodiment of the present invention;
FIG. 5 is a flow chart of a first embodiment of the present invention;
FIG. 6 is a flow chart of a second embodiment of the present invention;
FIG. 7 is a flow chart of a third embodiment of the present invention;
FIG. 8 is a flow chart of a fourth embodiment of the present invention;
FIG. 9 is a flow chart of a method for obtaining capability information about UE according to an embodiment of the present invention; and
FIG. 10 is a flow chart of a fifth embodiment of the present invention.

### DETAILED DESCRIPTION OF THE EMBODIMENTS

In order to register UE in a CS domain with a PN to fill a gap in the prior art and improve a PNM service to enable the UE in the CS domain to enjoy the PNM service, the present invention provides a method, a system, and a device for registering UE with a PN, so that the UE in the CS domain can be registered with the PN.

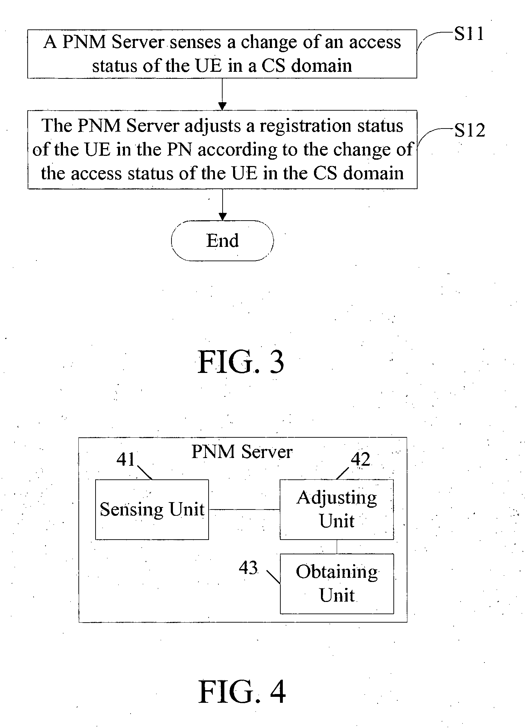

Referring to FIG. 3, in an embodiment, the present invention provides a method for registering UE with a PN, which includes the following steps.

In Step S11, a PNM server senses a change of an access status of the UE in a CS domain.

In this embodiment, the PNM server senses the change of the access status of the UE in the CS domain in one of the following modes.

In Mode 1, a visit location register (VLR) currently serving the UE reports a change event to the PNM server as a CAMEL mobility event when the access status of the UE in the CS domain is changed.

In Mode 2, the VLR currently serving the UE reports a change event as a CAMEL mobility event to a specified global system for mobile communications (GSM) service control function (SCF) (gsmSCF) when the access status of the UE in the CS domain is changed, the gsmSCF reports the change event to a presence server, and the presence server notifies the PNM server of the change event.

In Mode 3, a home subscriber server (HSS) sends a message to the PNM server when sensing a change of the access status of the UE in the CS domain, so as to notify the PNM server that the access status of the UE in the CS domain is changed.

In Step S12, the PNM server adjusts a registration status of the UE in the PN according to the change of the access status of the UE in the CS domain.

Specifically, the change of the access status of the UE in the CS domain indicates that an active location update event or an explicit startup event occurs to the UE, and the PNM server adjusts the registration status of the UE in the PN into a join status. Alternatively, the change indicates that a network implicit detach event, a user explicit shutdown event, or an event that the VLR actively purges user data occurs to the UE, and the PNM server adjusts the registration status of the UE in the PN into an exit status.

In order to further increase control levels for registering the UE in the CS domain with the PN and further utilize limited resources to provide better services for the UE in the CS domain, the PNM server first senses the change of the access status of the UE in the CS domain, then obtains capability information about the UE as a condition for adjusting the registration status of the UE in the PN, and adjusts the registration status of the UE in the PN according to the change of the access status of the UE in the CS domain after it is confirmed that the capability information about the UE is obtained.

Specifically, the PNM server obtains the capability information about the UE in one of the following modes.

In Mode 1, the PNM server subscribes to the capability information about the UE from a network entity or a provider that stores the capability information about the UE.

In Mode 2, the PNM server queries the capability information about the UE from a network entity (for example, a presence server or a DM server) or a provider (an application service provider in device profile evolution (DPE)) that stores the capability information about the UE.

More specifically, when the network entity is a presence server, the DM server inputs the capability information about the UE to the presence server as a presence user agent of the presence server, so that the presence server obtains and stores the capability information about the UE for the query of the PNM server.

Referring to FIG. 4, in an embodiment, the present invention further provides a PNM server, which includes a sensing unit 41 and an adjusting unit 42. The PNM server further includes an obtaining unit 43 if control levels for registering UE in a CS domain with a PN need to be further increased.

The sensing unit 41 is adapted to sense a change of an access status of the UE in the CS domain. Specifically, the sensing unit 41 senses the change of the access status of the UE in the CS domain in one of the following modes.

In Mode 1, the VLR currently serving the UE reports a change event as a CAMEL mobility event to the sensing unit 41 when the access status of the UE in the CS domain is changed.

In Mode 2, the VLR currently serving the UE reports a change event as a CAMEL mobility event to a specified gsmSCF when the access status of the UE in the CS domain is changed, the gsmSCF reports the change event to a presence server, and the presence server notifies the sensing unit 41 of the change event.

In Mode 3, an HSS sends a message to the sensing unit 41 when sensing a change of the access status of the UE in the CS domain, so as to notify the sensing unit 41 that the access status of the UE in the CS domain is changed.

The adjusting unit 42 is adapted to adjust a registration status of the UE in the PN according to the change of the access status of the UE in the CS domain sensed by the sensing unit 41.

The obtaining unit 43 is adapted to obtain capability information about the UE, and send an adjustment start signal to the adjusting unit 42.

In an embodiment, the present invention further provides a system for registering UE with a PN, which includes the UE and a PNM server. The system further includes a VLR currently serving the UE. Alternatively, the system further includes a VLR currently serving the UE, a specified gsmSCF, and a presence server. Alternatively, the system further includes an HSS.

An access status of the UE in a CS domain is changed.

The PNM server is adapted to sense the change of the access status of the UE in the CS domain, and adjust a registration status of the UE in the PN according to the change.

The VLR currently serving the UE is adapted to report a change event as a CAMEL mobility event to the PNM server when the access status of the UE in the CS domain is changed.

Alternatively, the VLR currently serving the UE is adapted to report a change event as a CAMEL mobility event to the specified gsmSCF when the access status of the UE in the CS domain is changed. The specified gsmSCF is adapted to receive the mobility event reported by the VLR and report the event to the presence server. The presence server is adapted to receive the event reported by the gsmSCF and notify the PNM server of the event.

Alternatively, the HSS is adapted to send a message to the PNM server when sensing the change of the access status of the UE in the CS domain, so as to notify the PNM server that the access status of the UE in the CS domain is changed.

Detailed illustrations are provided below with reference to four embodiments. In the embodiments of the present invention, an international mobile subscriber identity (IMSI) is a manifestation of a device identity (ID) in the CS domain or an IMS, and a mobile station international integrated services digital network number (MSISDN) is a manifestation of a user ID in the CS domain, which will not be described herein again.

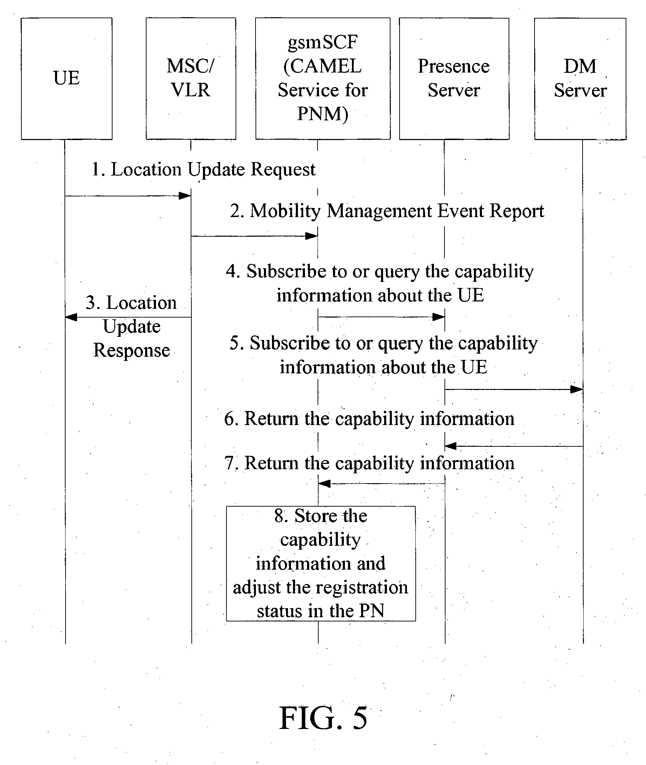

In a first embodiment, in a CS domain, when an access status of UE is changed, a VLR currently serving the UE sends a message to notify a PNM server. The PNM server adjusts a status of whether the UE joins a PN according to the change. Referring to FIG. 5, the process includes the following steps.

In Step 1, the UE in the CS domain initiates a location update request to a network. A location update type is attach, expressed as a user explicit startup request.

In Step 2, the VLR currently serving the UE changes an attach/detach status of the UE. As the user has subscribed to related CAMEL subscription information reported in a related mobility event in advance, at this time, the VLR detects the subscription information M_CSI and reports the mobility event to the PNM server (a gsmSCF in the CS domain of this embodiment).

In Step 3, a mobile switching center (MSC)/VLR currently serving the UE returns a location update accept message to the UE.

In Step 4, the PNM server (gsmSCF) subscribes to capability information about the UE from a presence server. At this time, a subscription request message may carry an MSISDN and an IMSI of the UE, or only carry the IMSI, or only carry the MSISDN.

Note: The gsmSCF may query to obtain the IMSI of the UE from an HSS through a MAP interface. The gsmSCF may also store the IMSI after obtaining the same.

If the subscription request message only carries the MSISDN of the UE, the presence server may query to obtain the IMSI of the UE from the HSS through an Sh interface.

In Step 5, the presence server queries or subscribes to the capability information about the UE from a DM server through the IMSI.

In Step 6, the DM server returns the capability information about the UE to the presence server.

In Step 7, the presence server returns the capability information to the PNM server.

Note: In this embodiment, Steps 4 to 7 are optional. If the UE in the CS domain is registered with the PN according to a registration policy, the PN does not need to obtain the capability information about the UE. Alternatively, if the PNM server has originally stored the capability information about the UE and finds that a corresponding relation between the MSISDN and the IMSI (the device ID and the user ID) of the UE that joins the PN is not changed, the PNM server may reuse the original capability information with no need to obtain the capability information from the presence server again.

In Step 8, the PNM server stores the capability information (if Steps 4 to 7 exist) and adjusts a registration status of the UE in the PN into a join status.

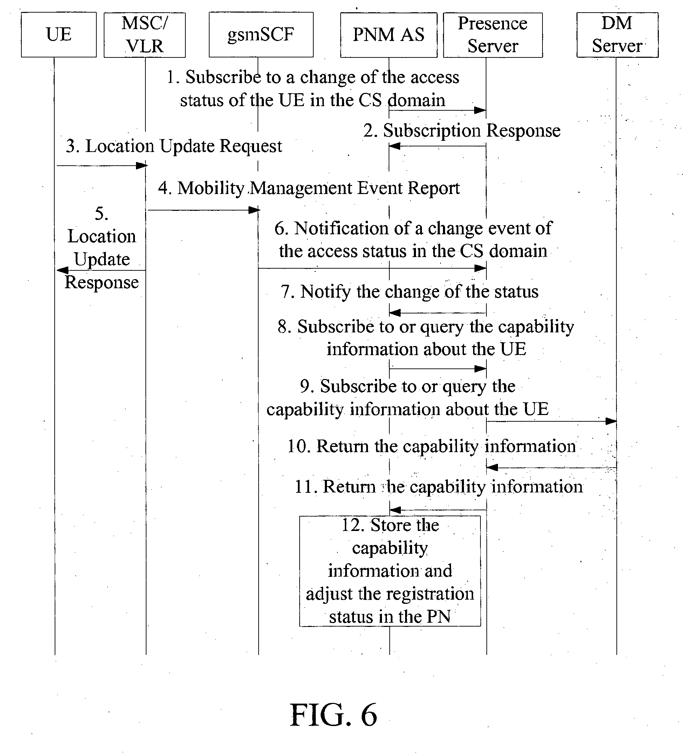

In a second embodiment, in a CS domain, when an access status of UE is changed, a VLR currently serving the UE sends a message to notify a specified gsmSCF. The gsmSCF then notifies the presence server. A PNM AS senses a change of an access status of the UE in the CS domain through the presence server and adjusts a registration status of the UE in a PN according to the change. Referring to FIG. 6, the process includes the following steps.

In Step 1, the PNM AS carries an MSISDN in a SIP subscription request message and subscribes to the access status of the UE in the CS domain from the presence server, for example, an attach/detach status change notification.

In Step 2, the presence server returns a subscription response.

In Step 3, the UE in the CS domain initiates a location update request. A location update type is explicit startup attach.

In Step 4, the VLR currently serving the UE reports the event to a specified gsmSCF according to the CAMEL subscription information that the user has subscribed to.

In Step 5, a MSC/VLR currently serving the UE returns a location update accept message to the UE.

In Step 6, the gsmSCF releases an event that the access status (for example, attach/detach) of the UE in the CS domain is changed and new status information to a presence server specified in advance.

In Step 7, the presence server releases a notification message to the PNM AS that subscribes to the event, and notifies the PNM AS of the event that the access status (attach/detach) of the UE in the CS domain is changed and the new status information.

In Step 8, the PNM AS subscribes to or queries capability information about the UE from the presence server. At this time, the subscribed or queried request message may carry an MSISDN and an IMSI, or only carry the IMSI, or only carry the MSISDN.

Note 1: In this step, the presence server that is requested to subscribe to the capability information about the UE and the presence server that notifies the change of the access status of the UE in the CS domain may be the same presence server or different presence servers.

Note 2: The PNM AS may query to obtain the IMSI of the UE from the HSS. In a circumstance that the presence server only obtains the MSISDN from the subscription request message in this step, the presence server may also query to obtain the IMSI of the UE from the HSS through the MSISDN.

In Step 9, the presence server queries or subscribes to the capability information about the UE from a DM server through the IMSI.

In Step 10, the DM server returns the capability information about the UE to the presence server.

In Step 11, the presence server returns the capability information to the PNM server.

Note: In this embodiment, Steps 8 to 11 are optional. If the UE in the CS domain is registered with the PN according to a registration policy, the PN does not need to obtain the capability information about the UE. Alternatively, if the PNM server finds that the UE is not changed and has originally stored the capability information about the UE, the PNM server does not need to subscribe to or query the capability information from the presence server again.

In Step 12, the PNM server stores the capability information (if Steps 8 to 11 exist) and adjusts the registration status of the UE in the PN into a join status.

Note: In FIG. 6, the gsmSCF and the PNM AS may be separately configured physical entities or an integrated physical entity.

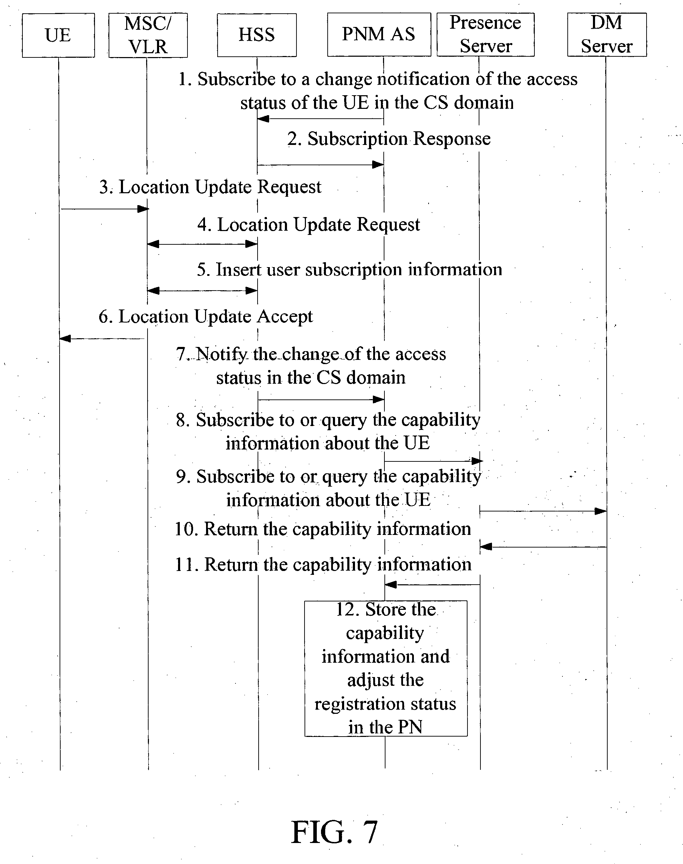

In a third embodiment, an HSS in a subscriber home domain finds that an access status of UE in a CS domain is changed and sends a message to notify a PNM AS of the change. The PNM AS adjusts a registration status of the UE in a PN according to the change. Referring to FIG. 7, the process includes the following steps.

In Step 1, the PNM AS subscribes to a change notification of the access status (for example, normal location update/purge) of the UE in the CS domain from the HSS through an Sh interface by using an MSISDN.

Note: If the PNM server is implemented through a gsmSCF in the CS domain, the PNM server may also subscribe to a change notification of the access status of the UE in the CS domain through a MAP interface between the gsmSCF and the HSS.

In Step 2, the HSS returns a subscription response.

In Step 3, the UE in the CS domain initiates a location update request and sends a location update request message to a MSC. A location update request type is active location update.

In Step 4, the VLR currently serving the UE sends the location update request message to the HSS and updates user location information in the HSS.

In Step 5, the HSS inserts user subscription information to the VLR.

In Step 6, the MSC/VLR currently serving the UE returns a location update accept message to the UE.

In Step 7, the HSS sends a change notification message to the PNM AS that subscribes to the change notification of the access status (for example, normal location update/purge) of the UE in the CS domain, so as to notify the PNM AS that the access status of the UE in the CS domain is changed.

In Step 8, the PNM AS subscribes to or queries capability information about the UE from a presence server. At this time, the subscribed or queried message may carry an MSISDN and an IMSI, or only carry the IMSI, or only carry the MSISDN.

Note 1: In this step, the presence server that is requested to subscribe to the capability information about the UE and the presence server that notifies the change of the access status of the UE in the CS domain may be the same presence server or different presence servers.

Note 2: The PNM AS may query to obtain the IMSI of the UE from the HSS. In a circumstance that the presence server only obtains the MSISDN from the subscription request message in this step, the presence server may also query to obtain the IMSI of the UE from the HSS through the MSISDN.

In Step 9, the presence server queries or subscribes to the capability information about the UE from a DM server through the IMSI.

In Step 10, the DM server returns the capability information about the UE to the presence server.

In Step 11, the presence server returns the capability information to the PNM server.

Note: In this embodiment, Steps 8 to 11 are optional. If the UE in the CS domain is registered with the PN according to a registration policy, the PN does not need to obtain the capability information about the UE. Alternatively, if the PNM server finds that the UE is not changed and has originally stored the capability information about the UE, the PNM server does not need to subscribe to or query the capability information from the presence server again.

In Step 12, the PNM server stores the capability information (if Steps 8 to 11 exist) and adjusts the registration status of the UE in the PN into a join status.

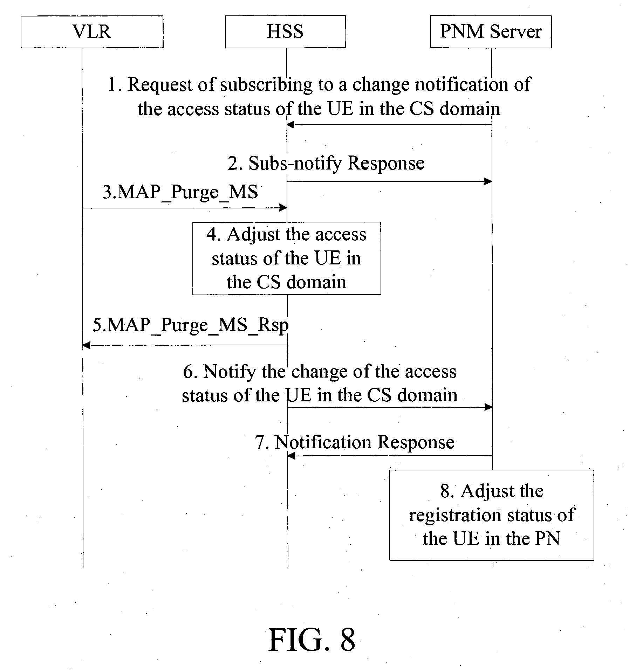

In a fourth embodiment, a VLR currently serving UE actively purges user data, resulting in a change of an access status of the UE. An HSS sends a message to notify a PNM server of the change. The PNM server adjusts a registration status of the UE in a PN according to the change. Referring to FIG. 8, the process includes the following steps.

In Step 1, the PNM server subscribes to a change notification of the access status of the UE in a CS domain from the HSS. If the PNM server is a gsmSCF in the CS domain, the subscription is realized through a MAP interface. If the PNM server is a SIP AS in an IMS domain, the subscription is realized by using a subs-notify message through an Sh interface.

In Step 2, the HSS returns a subs-notify response message.

In Step 3, the VLR deletes the user data and sends a message to notify the HSS when the UE has no connection with a network for a long time or due to other reasons.

In Step 4, the HSS adjusts the access status of the UE in the CS domain into a mobile station not reachable flag (MNRF) according to the message reported by the VLR.

In Step 5, the HSS returns a purge response message to the VLR.

In Step 6, the HSS sends a notification message to the PNM server to notify the PNM server of the change of the access status of the UE in the CS domain.

In Step 7, the PNM server returns a notification response message.

In Step 8, the PNM server adjusts the registration status of the UE in the PN into an exit status according to the notification message sent by the HSS. Optionally, the PNM server may continue to store capability information about the UE.

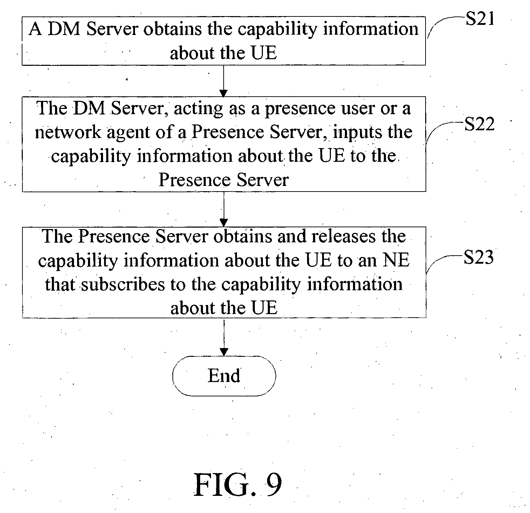

In order to enable an NE that requires the capability information about the UE to obtain the capability information about the UE, in an embodiment, the present invention further provides a method for obtaining capability information about UE. Referring to FIG. 9, the method mainly includes the following steps.

In Step S21, a DM server obtains the capability information about the UE.

In this embodiment, UE acting as a DM client reports capability information thereof to the DM server. Alternatively, the DM server actively queries the capability information from the DM client.

In Step S22, the DM server, acting as a presence user or a network agent of a presence server, inputs the capability information about the UE to the presence server.

The presence server needs to first send a request for querying or subscribing to the capability information about the UE to the DM server. After receiving the request from the presence server for querying or subscribing to the capability information about the UE from the DM server through a device ID (IMSI), the DM server acts as the presence user or the network agent of the presence server, and inputs the capability information about the UE to the presence server.

Therefore, the presence server needs to first obtain the device ID. Specifically, the device ID may be obtained in one of the following modes.

In Mode 1, the presence server queries to obtain the device ID from an HSS through a user ID number or a public user ID. The public user ID is a shared IP multimedia public identity (IMPU)). When the presence server queries the device ID from the HSS, the query message also needs to carry an IP multimedia private identity (IMPI).

In Mode 2, the NE that subscribes to the capability information about the UE from the presence server directly transfers the device ID to the presence server.

In Step S23, after obtaining the capability information about the UE, the presence server releases the capability information about the UE to the NE that subscribes to the capability information about the UE.

When the NE that subscribes to the capability information about the UE is a gsmSCF, the gsmSCF may use, but not limited to, an unstructured supplementary service data (USSD) message or a SIP message for subscription.

When the NE that subscribes to the capability information about the UE is a SIP AS, the SIP AS may use, but not limited to, a SIP message for subscription.

When another NE subscribes to the capability information about the UE from the presence server, the NE may transfer the user ID and the device ID to the presence server at the same time. The presence server records a corresponding relation between the user ID and the device ID, and switches between the two identities in the process of forwarding the capability information about the UE. Alternatively, the other NE may only transfer the device ID to the presence server for subscription. The NE initiatively records a corresponding relation between the user ID and the device ID, and switches between the two identities in the process of forwarding the capability information about the UE.

In an embodiment, the present invention further provides a system for obtaining capability information about UE, which includes the UE, a DM server, a presence server, and an NE that requires the capability information about the UE.

The DM server is adapted to obtain the capability information about the UE, and input the capability information about the UE to the presence server as a presence user or a network agent of the presence server.

The presence server is adapted to receive the capability information about the UE input by the DM server, and release the capability information about the UE to the NE that subscribes to the capability information about the UE.

In this embodiment, in the CS domain, the PNM server subscribes to the capability information about the UE from the presence server. An implementation mode that is applicable in both the CS domain and the IMS domain is also provided. For example, the PNM server directly subscribes to the capability information about the UE from a DM server (an open mobile architecture DM server) or an application service provider in DPE.

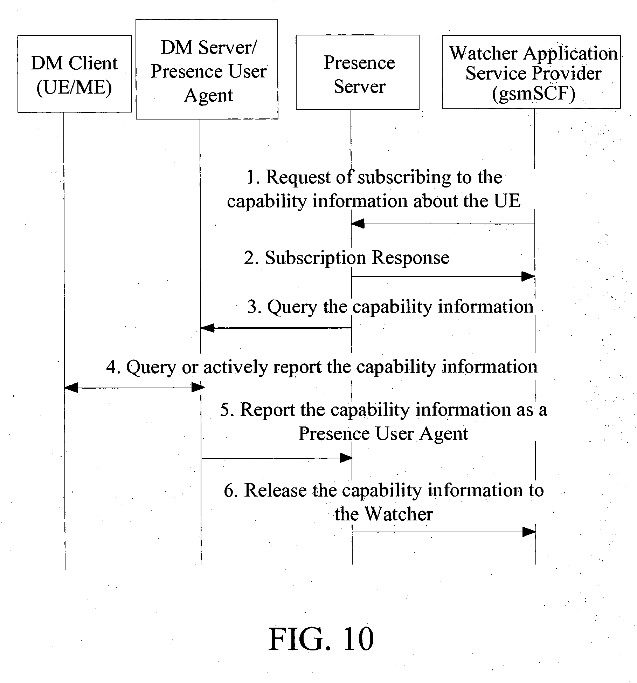

In a fifth embodiment, an entity gsmSCF in a network obtains capability information about UE from a presence server. A DM server, acting as a presence user agent, inputs the capability information about the UE to the presence server. Referring to FIG. 10, the process includes the following steps.

In Step 1, the gsmSCF, acting as a watcher, subscribes to the capability information about the UE from the presence server. A subscription request may be a USSD message or a SIP message. The request may carry an MSISDN and/or an IMSI (a user ID and/or a device ID).

In Step 2, the presence server returns a subscription response message. If the subscription request only carries the user ID (for example, the MSISDN in the CS domain), the presence server needs to query to obtain the IMSI of the UE from an HSS.

In Step 3, the presence server actively queries the capability information about the UE from the DM server when necessary.

In Step 4, UE or mobile equipment (ME), acting as a DM client, reports capability information thereof to the DM server. Alternatively, the DM server actively sends a message to query the capability information from the DM client.

In Step 5, the DM server, acting as a presence user agent in a presence scheme, reports the obtained capability information about the UE to the presence server.

In Step 6, the presence server releases the capability information to the watcher gsmSCF that subscribes to the capability information.

In this embodiment, Steps 1 and 2 may be performed after Step 3. The watcher application is not limited to a gsmSCF, and may also be any entity in the network that requires the capability information about the UE and has a subscription function. Besides, these entities may directly query or subscribe to the capability information about the UE from the DM server through the IMSI.

In view of the above, in the method for registering UE with a PN provided in the embodiment of the present invention, a PNM server senses a change of an access status of the UE in a CS domain, and then adjusts a registration status of the UE in the PN according to the change of the access status of the UE in the CS domain. Therefore, the UE in the CS domain can be registered with the PN, and a CS domain user may also enjoy the PNM service.

The PNM server first senses the change of the access status of the UE in the CS domain, then obtains the capability information about the UE as a condition for adjusting the registration status of the UE in the PN, and adjusts the registration status of the UE in the PN according to the change of the access status of the UE in the CS domain after it is confirmed that the capability information about the UE is obtained. Thereby, control levels for registering the UE in the CS domain with the PN are increased, and limited resources can be utilized to provide better services for the UE in the CS domain.

The present invention further provides a PNM server and a system for registering UE with a PN, so as to support the method for registering UE with a PN provided in the embodiment of the present invention.

In the method and system for obtaining capability information about UE provided in the embodiments of the present invention, a DM server obtains the capability information about the UE. The DM server, acting as a presence user or a network agent of a presence server, inputs the capability information about the UE to the presence server. The presence server obtains and releases the capability information about the UE to an NE that subscribes to the capability information about the UE, so that the NE that requires the capability information about the UE obtains the capability information about the UE.

Moreover, the method for obtaining capability information about UE provided in the embodiment of the present invention is applicable in the CS domain and the IMS domain.

It will be apparent to persons skilled in the art that various modifications and variations can be made to the present invention.

## Claims

1. A method for registering user equipment, UE, with a personal network, PN, comprising:
sensing (S11), by a PN management, PNM, server, a change of an access status of the UE in a circuit switched, CS, domain; and
adjusting (S12), by the PNM server, a registration status of the UE in the PN according to the change of the access status of the UE in the CS domain.

2. The method for registering UE with a PN according to claim 1, wherein the PNM server senses the change of the access status of the UE in the CS domain in one of the following modes:
in Mode 1, a visit location register, VLR, currently serving the UE reports a change event to the PNM server as a CAMEL mobility event when the access status of the UE in the CS domain is changed;
in Mode 2, the VLR currently serving the UE reports a change event as a CAMEL mobility event to a specified GSM service control function, gsmSCF, when the access status of the UE in the CS domain is changed, the gsmSCF reports the change event to a presence server, and the presence server notifies the PNM server of the change event; and
in Mode 3, a home subscriber server, HSS, sends a message to the PNM server when sensing a change of the access status of the UE in the CS domain, so as to notify the PNM server that the access status of the UE in the CS domain is changed.

3. The method for registering UE with a PN according to claim 1, wherein the change indicates that an active location update event or an explicit startup event occurs to the UE, and the PNM server adjusts the registration status of the UE in the PN into a join status.

4. The method for registering UE with a PN according to claim 1, wherein the change indicates that a network implicit detach event, a user explicit shutdown event, or an event that the VLR actively purges user data occurs to the UE, and the PNM server adjusts the registration status of the UE in the PN into an exit status.

5. The method for registering UE with a PN according to any one of claims 1 to 4, wherein the PNM server first senses the change of the access status of the UE in the CS domain, and then adjusts the registration status of the UE in the PN according to the change of the access status of the UE in the CS domain after obtaining capability information about the UE.

6. The method for registering UE with a PN according to claim 5, wherein the PNM server obtains the capability information about the UE in one of the following modes:
in Mode 1, the PNM server subscribes to the capability information about the UE from a network entity or a provider that stores the capability information about the UE; and
in Mode 2, the PNM server queries the capability information about the UE from a network entity or a provider that stores the capability information about the UE.

7. The method for registering UE with a PN according to claim 6, wherein the network entity is a presence server or a device management, DM, server, and the provider is an application service provider in device profile evolution, DPE.

8. The method for registering UE with a PN according to claim 7, wherein when the network entity is a presence server, the DM server inputs the capability information about the UE to the presence server as a presence user agent of the presence server.

9. A personal network management, PNM, server, comprising:
a sensing unit (41), adapted to sense a change of an access status of user equipment, UE, in a circuit switched, CS, domain; and
an adjusting unit (42), adapted to adjust a registration status of the UE in a personal network, PN, according to the change of the access status of the UE in the CS domain sensed by the sensing unit (41).

10. The PNM server according to claim 9, further comprising:
an obtaining unit (43), adapted to obtain capability information about the UE, and send an adjustment start signal to the adjusting unit (42).

11. A system for registering user equipment, UE, with a personal network, PN, comprising:
the UE, wherein an access status of the UE in a circuit switched, CS, domain is changed; and
a PN management, PNM, server according to claim 9.

12. The system for registering UE with a PN according to claim 11, further comprising:
a visit location register, VLR, currently serving the UE, adapted to report a change event as a CAMEL mobility event to the PNM server when the access status of the UE in the CS domain is changed.

13. The system for registering UE with a PN according to claim 11, further comprising:
a VLR currently serving the UE, adapted to report a change event as a CAMEL mobility event to a specified GSM service control function, gsmSCF, when the access status of the UE in the CS domain is changed;
wherein the specified gsmSCF is adapted to receive the mobility event reported by the VLR and report the event to a presence server; and
wherein the presence server is adapted to receive the event reported by the gsmSCF and notify the PNM server of the event.

14. The system for registering UE with a PN according to claim 11, further comprising:
a home subscriber server, HSS, adapted to send a message to the PNM server when sensing the change of the access status of the UE in the CS domain, so as to notify the PNM server that the access status of the UE in the CS domain is changed.

## Patentansprüche

1. Verfahren zum Registrieren eines Benutzerendgeräts (user equipment, UE) an einem persönlichen Netzwerk, PN, das die folgenden Schritte aufweist:
Erkennen (S11) durch einen PN-Verwaltungs(PN management, PNM)-Server einer Änderung eines Zugangsstatus des UE in einer "Circuit Switched"(CS)-Domäne; und
Einstellen (S12) durch den PNM-Server eines Registrierungsstatus des UE im PN entsprechend der Änderung des Zugangsstatus des UE in der CS-Domäne.

2. Verfahren zum Registrieren eines UE an einem PN nach Anspruch 1, wobei der PNM-Server die Änderung des Zugangsstatus des UE in der CS-Domäne in einem der folgenden Modi erkennt:
in einem Modus 1 meldet ein "Visit Location Register", VLR, das das UE gegenwärtig bedient, ein Änderungsereignis an den PNM-Server als ein CAMEL-Mobilitätsereignis, wenn der Zugangsstatus des UE in der CS-Domäne geändert wird;
in einem Modus 2 meldet das VLR, das das UE gegenwärtig bedient, ein Änderungsereignis als ein CAMEL-Mobilitätsereignis an eine spezifizierte GSM-"Service Control Function", gsmSCF, wenn der Zugangsstatus des UE in der CS-Domäne geändert wird, meldet die gsmSCF das Änderungsereignis an einen Präsenzserver, und der Präsenzserver meldet dem PNM-Server das Änderungsereignis; und
in einem Modus 3 sendet ein "Home Subscriber Server", HSS, eine Nachricht an den PNM-Server, wenn eine Änderung des Zugangsstatus des UE in der CS-Domäne erkannt wird, um dem PNM-Server zu melden, dass der Zugangsstatus des UE in der CS-Domäne geändert wird.

3. Verfahren zum Registrieren eines UE an einem PN nach Anspruch 1, wobei die Änderung anzeigt, dass beim UE ein aktives Standortaktualisierungsereignis oder ein explizites Einschaltereignis auftritt, und der PNM-Server den Registrierungsstatus des UE im PN auf einen Beitrittsstatus einstellt.

4. Verfahren zum Registrieren eines UE an einem PN nach Anspruch 1, wobei die Änderung anzeigt, dass beim UE ein implizites Netzwerktrennungsereignis, ein explizites Benutzerabschaltereignis oder ein Ereignis auftritt, bei dem das VLR aktiv Benutzerdaten löscht, und der PNM-Server den Registrierungsstatus des UE im PN auf einen Austrittsstatus einstellt.

5. Verfahren zum Registrieren eines UE an einem PN nach einem der Ansprüche 1 bis 4, wobei der PNM-Server zuerst die Änderung des Zugangsstatus des UE in der CS-Domäne erkennt, und dann den Registrierungsstatus des UE im PN entsprechend der Änderung des Zugangsstatus des UE in der CS-Domäne nach Beschaffung von Fähigkeitsinformationen über das UE einstellt.

6. Verfahren zum Registrieren eines UE an einem PN nach Anspruch 5, wobei der PNM-Server die Fähigkeitsinformationen über das UE in einem der folgenden Modi beschafft:
in einem Modus 1 abonniert der PNM-Server die Fähigkeitsinformationen über das UE von einer Netzwerkentität oder einem Anbieter, der die Fähigkeitsinformationen über das UE speichert; und
in einem Modus 2 fragt der PNM-Server die Fähigkeitsinformationen über das UE von einer Netzwerkentität oder einem Anbieter ab, der die Fähigkeitsinformationen über das UE speichert.

7. Verfahren zum Registrieren eines UE an einem PN nach Anspruch 6, wobei die Netzwerkentität ein Präsenzserver oder ein "Device Management"(DM)-Server ist, und der Anbieter ein Anwendungsdienstanbieter in "Device Profile Evolution", DPE, ist.

8. Verfahren zum Registrieren eines UE an einem PN nach Anspruch 7, wobei wenn die Netzwerkentität ein Präsenzserver ist, der DM-Server die Fähigkeitsinformationen über das UE in den Präsenzserver als "Presence User Agent" des Präsenzservers eingibt.

9. Verwaltungsserver eines persönlichen Netzwerks (PNM-Server), der Folgendes aufweist:
eine Erkennungseinheit (41), die eingerichtet ist, eine Änderung eines Zugangsstatus eines Benutzerendgeräts, UE, in einer "Circuit Switched"(CS)-Domäne abzutasten; und
eine Einstellungseinheit (42), die eingerichtet ist, einen Registrierungsstatus des UE in einem persönlichen Netzwerk, PN, entsprechend der Änderung des Zugangsstatus des UE in der CS-Domäne einzustellen, die durch die Erkennungseinheit (41) erkannt wird.

10. PNM-Server nach Anspruch 9, der ferner aufweist:
eine Beschaffungseinheit (43), die eingerichtet ist, Fähigkeitsinformationen über das UE zu beschaffen und ein Einstellungsstartsignal an die Einstellungseinheit (42) zu senden.

11. System zum Registrieren eines Benutzerendgeräts, UE, an einem persönlichen Netzwerk, PN, das Folgendes aufweist:
das UE, wobei ein Zugangsstatus des UE in einer "Circuit Switched"(CS)-Domäne geändert wird; und
einen PN-Verwaltungs(PNM)-Server nach Anspruch 9.

12. System zum Registrieren eines UE an einem PN nach Anspruch 11, das ferner aufweist:
ein "Visit Location Register", VLR, das das UE gegenwärtig bedient, das eingerichtet ist, ein Änderungsereignis als ein CAMEL-Mobilitätsereignis an den PNM-Server zu melden, wenn der Zugangsstatus des UE in der CS-Domäne geändert wird.

13. System zum Registrieren eines UE an einem PN nach Anspruch 11, das ferner aufweist:
ein VLR, das das UE gegenwärtig bedient, das eingerichtet ist, ein Änderungsereignis als ein CAMEL-Mobilitätsereignis an eine spezifizierte GSM- "Service Control Function", gsmSCF, zu melden, wenn der Zugangsstatus des UE in der CS-Domäne geändert wird;
wobei die spezifizierte gsmSCF eingerichtet ist, das durch das VLR gemeldete Mobilitätsereignis zu empfangen und das Ereignis an einen Präsenzserver zu melden; und
wobei der Präsenzserver eingerichtet ist, das durch die gsmSCF gemeldete Ereignis zu empfangen und dem PNM-Server das Ereignis zu melden.

14. System zum Registrieren eines UE an einem PN nach Anspruch 11, das ferner aufweist:
einen "Home Subscriber Server", HSS, der eingerichtet ist, eine Nachricht an den PNM-Server zu senden, wenn die Änderung des Zugangsstatus des UE in der CS-Domäne erkannt wird, um dem PNM-Server zu melden, dass der Zugangsstatus des UE in der CS-Domäne geändert wird.

## Revendications

1. Procédé d'enregistrement d'un équipement utilisateur, UE (User Equipment), sur un réseau personnel, PN (Personal Network), comprenant :
la détection (S11), par un serveur de gestion de PN, PNM (PN Management), d'une modification de l'état d'accès de l'UE dans un domaine à commutation de circuit, CS (Circuit Switch) ; et
l'ajustement (S 12), par le serveur PNM, d'un état d'enregistrement de l'UE sur le PN conformément à la modification de l'état d'accès de l'UE dans le domaine CS.

2. Procédé d'enregistrement d'un UE sur un PN selon la revendication 1, dans lequel le serveur PNM détecte la modification de l'état d'accès de l'UE dans le domaine CS selon l'un des modes suivants :
en Mode 1, un registre de localisation de visiteurs, VLR (Visit Location Register), desservant à l'instant courant l'UE signale un événement de modification au serveur PNM en tant qu'événement de mobilité CAMEL lorsque l'état d'accès de l'UE dans le domaine CS est modifié ;
en Mode 2, le VLR desservant à l'instant courant l'UE signale un événement de modification en tant qu'événement de mobilité CAMEL à une fonction de commande de service GSM, gsmSCF (GSM Service Control Function), spécifiée lorsque l'état d'accès de l'UE dans le domaine CS est modifié, la gsmSCF signale l'événement de modification à un serveur de présence, et le serveur de présence notifie l'événement de modification au serveur PNM ; et
en Mode 3, un serveur d'abonné résidentiel, HSS (Home Subscriber Server), envoie un message au serveur PNM lorsqu'il détecte une modification de l'état d'accès de l'UE dans le domaine CS, de façon à notifier au serveur PNM que l'état d'accès de l'UE dans le domaine CS est modifié.

3. Procédé d'enregistrement d'un UE sur un PN selon la revendication 1, dans lequel la modification indique qu'un événement de mise à jour de localisation active ou qu'un événement de démarrage explicite se produit dans l'UE, et le serveur PNM ajuste l'état d'enregistrement de l'UE sur le PN pour le faire passer à l'état de raccordement.

4. Procédé d'enregistrement d'un UE sur un PN selon la revendication 1, dans lequel la modification indique qu'un événement de détachement implicite du réseau, qu'un événement d'interruption explicite de l'utilisateur ou qu'un événement lors duquel le VLR efface activement des données d'utilisateur se produit dans l'UE, et le serveur PNM fait passer l'état d'enregistrement de l'UE sur le PN à un état de sortie.

5. Procédé d'enregistrement d'un UE sur un PN selon l'une quelconque des revendications 1 à 4, dans lequel le serveur PNM détecte en premier lieu la modification de l'état d'accès de l'UE dans le domaine CS puis ajuste l'état d'enregistrement de l'UE sur le PN conformément à la modification de l'état d'accès de l'UE dans le domaine CS après avoir obtenu des informations de capacité concernant l'UE.

6. Procédé d'enregistrement d'un UE sur un PN selon la revendication 5, dans lequel le serveur PNM obtient les informations de capacité concernant l'UE selon l'un des modes suivants :
en Mode 1, le serveur PNM s'abonne aux informations de capacité concernant l'UE auprès d'une entité du réseau ou d'un fournisseur qui stocke les informations de capacité concernant l'UE ; et
en Mode 2, le serveur PNM demande les informations de capacité concernant l'UE à une entité du réseau ou à un fournisseur qui stocke les informations de capacité concernant l'UE.

7. Procédé d'enregistrement d'un UE sur un PN selon la revendication 6, dans lequel l'entité de réseau est un serveur de présence ou un serveur de gestion de dispositif, DM (Device Management), et le fournisseur est un fournisseur de service d'application en évolution de profil de dispositif, DPE (Device Profile Evolution).

8. Procédé d'enregistrement d'un UE sur un PN selon la revendication 7, dans lequel, lorsque l'entité de réseau est un serveur de présence, le serveur DM fournit en entrée des informations de capacité concernant l'UE au serveur de présence en tant qu'agent utilisateur de présence du serveur de présence.

9. Serveur de gestion de réseau personnel, PNM, comprenant :
une unité de détection (41), apte à détecter une modification d'un état d'accès d'un équipement utilisateur, UE, dans un domaine à commutation de circuit, CS ; et
une unité d'ajustement (42), apte à ajuster un état d'enregistrement de l'UE dans un réseau personnel, PN, conformément à la modification de l'état d'accès de l'UE dans le domaine CS détectée par l'unité de détection (41).

10. Serveur PNM selon la revendication 9, comprenant en outre :
une unité d'obtention (43), apte à obtenir des informations de capacité concernant l'UE, et à envoyer un signal de début d'ajustement à l'unité d'ajustement (42).

11. Système destiné à enregistrer un équipement utilisateur, UE, sur un réseau personnel, PN, comprenant :
l'UE, dans lequel un état d'accès de l'UE dans un domaine à commutation de circuit, CS, est modifié ; et
un serveur de gestion de PN, PNM, selon la revendication 9.

12. Système destiné à enregistrer un UE sur un PN selon la revendication 11, comprenant en outre :
un registre de localisation de visiteur, VLR, desservant à l'instant courant l'UE, apte à signaler un événement de modification en tant qu'événement de mobilité CAMEL au serveur PNM lorsque l'état d'accès de l'UE dans le domaine CS est modifié.

13. Système destiné à enregistrer un UE sur un PN selon la revendication 11, comprenant en outre :
un VLR desservant à l'instant courant l'UE, apte à signaler un événement de modification en tant qu'événement de mobilité CAMEL à une fonction de commande de service GSM, gsmSCF, spécifiée lorsque l'état d'accès de l'UE dans le domaine CS est modifié ;
dans lequel la gsmSCF spécifiée est apte à recevoir l'événement de mobilité signalé par le VLR et à signaler l'événement à un serveur de présence ; et
dans lequel le serveur de présence est apte à recevoir l'événement signalé par la gsmSCF et à notifier l'événement au serveur PNM.

14. Système destiné à enregistrer un UE sur un PN selon la revendication 11, comprenant en outre :
un serveur d'abonné résidentiel, HSS, apte à envoyer un message au serveur PNM lorsqu'il détecte la modification de l'état d'accès de l'UE dans le domaine CS, de manière à notifier au serveur PNM le fait que l'état d'accès de l'UE dans le domaine CS est modifié.
